# EUROPEAN PATENT APPLICATION

(11) **EP 4 117 130 A1**
(43) Date of publication of application: **11.01.2023**
(21) Application number: 22181803.2
(22) Date of filing: 29.06.2022
(51) Int. Cl.: H02J 1/04, H02J 1/10, H02J 7/00

(54) **POWER DEVICE**

(30) Priority: 09.07.2021 JP 2021114415
(71) Applicant: OMRON Corporation, Kyoto-shi, Kyoto 600-8530 (JP)
(72) Inventor: NAGANO, Masaaki, Kyoto, 600-8530 (JP); TANINO, Kohei, Kyoto, 600-8530 (JP); WATANABE, Tomonori, Kyoto, 600-8530 (JP)
(74) Representative: HGF

(57) **Abstract**

A power device (1) includes a plurality of terminal blocks (2) electrically connected to each other. Each of the plurality of terminal blocks (2) is configured to be connectable to an external device and to be capable of supplying current to the connected external device. Each of the plurality of terminal blocks (2) includes a current supply circuit (PI, P2) that supplies current to the connected external device, and a current setting unit (3) that sets a maximum current to be supplied to the external device via the current supply circuit (PI, P2).

## Description

### TECHNICAL FIELD

The present disclosure relates to a power device including a plurality of terminal blocks.

### BACKGROUND ART

Patent document 1 discloses a power device having a plurality of output terminal blocks. Each output terminal block supplies a voltage and a current to a load via wiring.

### CITATION LIST

### PATENT LITERATURE

Patent Document 1: Japanese Patent Application Laid-Open No. 2021-87302

### SUMMARY

Generally, in the power device, the output terminal blocks are electrically connected to each other, and a thickness of a wiring is changed in accordance with current to be supplied to the load connected to each output terminal block. For example, in a case where a plurality of loads that respectively is supplied to different currents is connected to the power device, when a load that is connected with wiring having a small diameter is broken due to a short circuit, a current to be supplied to another load may concentrate on the wiring connected to the broken load. When the current to be supplied to the another load concentrate on one wiring, a current flowing through this wiring may exceed an allowable amount, thereby causing a spread of fire in the wiring.

An object of the present disclosure is to provide a power device capable of preventing spread of fire in wiring connected to an external device broken due to a short circuit when one of a plurality of external devices connected to each terminal block via wiring is broken due to a short circuit.

A power device according to one aspect of the present disclosure includes
a plurality of terminal blocks that is electrically connected to each other, each of the plurality of terminal blocks being configured to be connectable to an external device and to be capable of supplying current to the connected external device, wherein
each of the plurality of terminal blocks includes
a current supply circuit that supplies current to the connected external device, and
a current setting unit that sets a maximum current to be supplied to the external device via the current supply circuit.

The power device according to the above aspect can prevent spread of fire in wiring connected to an external device broken due to a short circuit when one of a plurality of external devices connected to each terminal block via wiring is broken due to a short circuit.

### BRIEF DESCRIPTION OF DRAWINGS

Fig. 1 is a front view illustrating a power device according to one embodiment of the present disclosure.
Fig. 2 is a circuit diagram of the power device of Fig. 1.
Fig. 3 is a front view illustrating a first modification of the power device of Fig. 1.
Fig. 4 is a circuit diagram of the power device of Fig. 3.
Fig. 5 is a front view illustrating a second modification of the power device of Fig. 1.
Fig. 6 is a circuit diagram of the power device of Fig. 5.

### DESCRIPTION OF EMBODIMENTS

An embodiment and a modifications of the present disclosure will be described below with reference to the drawings. In the following description, terms (terms including, for example, "upper", "lower", etc.) indicating specific directions or positions are used as necessary, but the use of these terms is to facilitate understanding of the disclosure with reference to the drawings, and the technical scope of the present disclosure is not limited by the meanings of these terms. Further, the following description is essentially an example, and is not intended to limit the present disclosure, its application, or its use. Furthermore, the drawings are schematic, and ratios of dimensions and the like do not necessarily match actual ones.

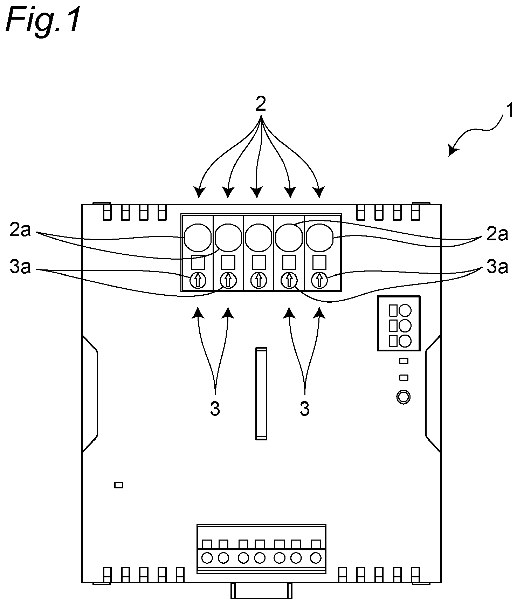

As illustrated in Fig. 1, a power device 1 according to one exemplary embodiment of the present disclosure includes a plurality of terminal blocks 2 electrically connected to each other. For example, the power device 1 shown in Fig. 1 includes five terminal blocks 2 and uses four terminal block 2 among five terminal blocks.

Each terminal block 2 is electrically connected to an external device (not illustrated) via a wiring (not illustrated). Each terminal block 2 is provided with a hole 2a for accommodating the wiring. The wiring is connected to a secondary circuit P2 of each terminal block 2 via the hole 2a. The power device 1 supplies source power to the external device via the terminal blocks 2 and the wiring. The external device is an example of a load, and includes, for example, a motor or a light emitting diode (LED) lighting device.

The wiring is selected by, for example, an allowable current value corresponding to a magnitude of a rated current of the external device. For example, when the external device is an LED lighting device with a rated current of 1 A (ampere), the wiring of American wire gauge (AWG) 18 is selected. For example, when the external device is motor with a rated current of 37 A, the wiring of AWG 12 is used.

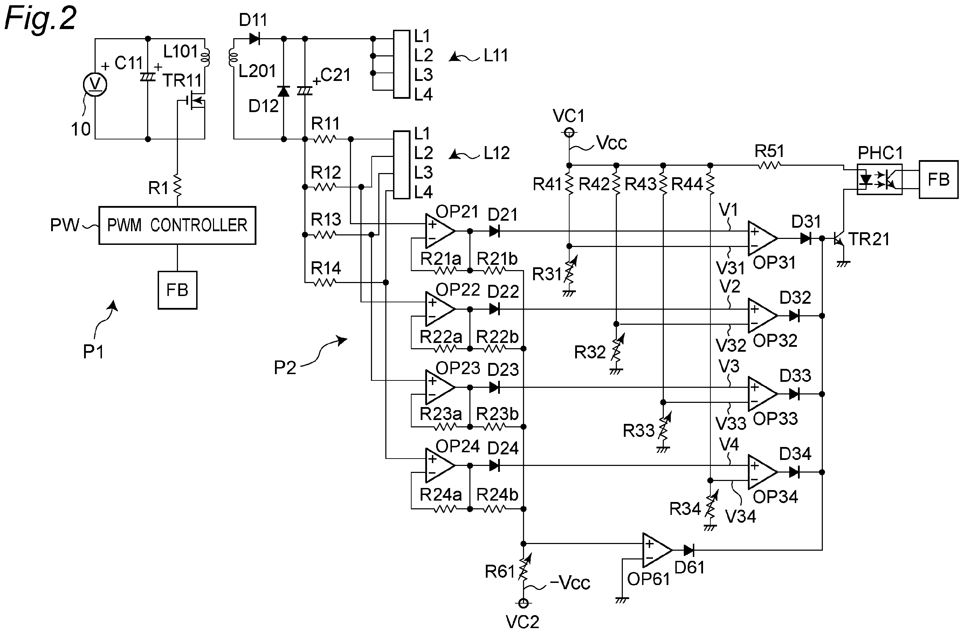

As illustrated in Figs. 1 and 2, each terminal block 2 includes a current supply circuit that supplies a current to a connected external device, and a current setting unit 3.

As an example, as illustrated in Fig. 2, the current supply circuit includes a primary circuit P1 and a secondary circuit P2.

The primary circuit P1 includes a power supply 10, a capacitor C11, a transistor TR11, and an inductor L101. A resistor R1 and a pulse width modulation (PWM) controller PW are connected to the transistor TR11. Power is supplied from the primary circuit P1 to the secondary circuit P2 via the inductor L101 and an inductor L201 to be described later.

The secondary circuit P2 includes the inductor L201, two diodes D11, D12, a capacitor C21, four output units L1, L2, L3, L4, and four resistors R11, R12, R13, R14. Power supplied from the primary circuit P1 via the inductor L101 and the inductor L201 is rectified and smoothed via the diodes D11, D12 and the capacitor C21.

Each output unit L1, L2, L3, L4 has a positive electrode L11 and a negative electrode L12 connected to the external device via the wiring. The four resistors R11, R12, R13, R14 are disposed between the positive electrodes L11 and the negative electrodes L12 of the output units L1, L2, L3, L4. As one example, the four resistors R11, R12, R13, R14 have identical resistance value.

The secondary circuit P2 includes four operational amplifiers OP21, OP22, OP23, OP24. Each of the operational amplifiers OP21, OP22, OP23, OP24 amplifies a voltage of current flowing through corresponding one of resistors R11, R12, R13, R14.

In the present embodiment, a noninverting input terminal of the operational amplifier OP1 is connected to the resistor R11 and the negative electrode L12. An inverting input terminal of the operational amplifier OP1 is connected to an output terminal of the operational amplifier OP1 and two resistors R21a, R21b. The output terminal of the operational amplifier OP1 is connected to a diode D21. A noninverting input terminal of the operational amplifier OP2 is connected to the resistor R12 and the negative electrode L12. An inverting input terminal of the operational amplifier OP2 is connected to an output terminal of the operational amplifier OP2 and two resistors R22a, R22b. The output terminal of the operational amplifier OP2 is connected to a diode D22. A noninverting input terminal of the operational amplifier OP3 is connected to the resistor R13 and the negative electrode L12. An inverting input terminal of the operational amplifier OP3 is connected to an output terminal of the operational amplifier OP3 and two resistors R23a, R23b. The output terminal of the operational amplifier OP3 is connected to a diode D23. A noninverting input terminal of the operational amplifier OP4 is connected to the resistor R14 and the negative electrode L12. An inverting input terminal of the operational amplifier OP4 is connected to an output terminal of the operational amplifier OP4 and two resistors R24a, R24b. The output terminal of the operational amplifier OP4 is connected to a diode D24. Voltages of currents, which are amplified by the operational amplifiers OP1, OP2, OP3, OP4, flowing through the resistors R11, R12, R13, R14 are respectively denoted by V1, V2, V3, V4.

The secondary circuit P2 includes four variable resistors R31, R32, R33, R 34, four resistors R41, R42, R43, R44, and four operational amplifiers OP31, OP32, OP33, OP34. In the embodiment, the variable resistors R31, R32, R33, R34 configure a part of the current setting unit 3.

In the present embodiment, a noninverting input terminal of the operational amplifier OP31 is connected to the diode D21. An inverting input terminal of the operational amplifier OP31 is connected to the variable resistor R31 and the resistor R41. An output terminal of the operational amplifier OP31 is connected to a diode D31. A noninverting input terminal of the operational amplifier OP32 is connected to the diode D22. An inverting input terminal of the operational amplifier OP32 is connected to the variable resistor R32 and the resistor R42. An output terminal of the operational amplifier OP32 is connected to a diode D32. A noninverting input terminal of the operational amplifier OP33 is connected to the diode D23. An inverting input terminal of the operational amplifier OP33 is connected to the variable resistor R33 and the resistor R43. An output terminal of the operational amplifier OP33 is connected to a diode D33. A noninverting input terminal of the operational amplifier OP34 is connected to the diode D24. An inverting input terminal of the operational amplifier OP34 is connected to the variable resistor R34 and the resistor R44. An output terminal of the operational amplifier OP34 is connected to a diode D34. Voltages between the variable resistors R31, R32, R33, R34 and the corresponding resistors R41, R42, R43, R44 before being input into the inverting input terminals of the operational amplifiers OP31, OP32, OP33, OP34 are respectively denoted by V31, V32, V33, V34. Voltages to be output respectively from the operational amplifiers OP31, OP32, OP33, OP34 are changed in accordance with resistance values of the variable resistors R31, R32, R33, R34.

The secondary circuit P2 includes a resistor R51, a variable resistor R61, a positive electrode VC1 and a negative electrode VC2 for supplying a constant voltage Vcc, an operational amplifier OP61, a diode D61, a transistor TR21, and a photocoupler PHC1.

In the present embodiment, the positive electrode VC1 for supplying the constant voltage Vcc is connected to the resistors R41, R42, R43, R44. The constant voltage Vcc is divided by the variable resistors R31, R32, R33, R34 and the resistors R41, R42, R43, R44, thereby obtaining the voltages V31, V32, V33, V34. The negative electrode VC2 for supplying the constant voltage Vcc is connected to the variable resistor R61. The variable resistor R61 is connected to the four resistors R21b, R22b, R23b, R24b and a noninverting input terminal of the operational amplifier OP61. An inverting input terminal of the operational amplifier OP61 is grounded. An output terminal of the operational amplifier OP61 is connected to the diode D61. Diodes D31, D32, D33, D34, D61 are connected to the transistor TR21. The resistor R51 and the transistor TR21 are connected to the photocoupler PHC1. Voltages output from the operational amplifiers OP31, OP32, OP33, OP34 are used as a feedback signal to the primary circuit P1 via the photocoupler PHC1. The feedback signal is input to a PWM controller PW. The PWM controller PW performs PWM control on voltage of the secondary circuit P2 of the power device 1 based on the feedback signal.

The current setting unit 3 sets a maximum current to be supplied to an external device via the current supply circuit. In the present embodiment, as illustrated in Figs. 1 and 2, the current setting unit 3 includes the variable resistor R31, R32, R33, R34 and an operation unit 3a. The operation unit 3a is configured to be able to change a resistance value of the variable resistor R31, R32, R33, R34. For example, the operation unit 3a is configured by a rotary volume or a slide volume, and is disposed to be adjacent to the hole 2a as illustrated in Fig. 1.

The power device 1 can exert the following effects.

The power device 1 includes a plurality of the terminal blocks 2 electrically connected to each other. Each terminal block 2 is configured to be respectively connectable to an external device and to supply current to the connected external device. Each terminal block 2 includes a current supply circuit and a current setting unit 3. The current supply circuit supplies current to the external device connected to the terminal block 2. The current setting unit 3 sets a maximum current to be supplied to the external device via the current supply circuit. With such a configuration, a maximum current to be supplied to each terminal block 2 can be set. Thus, even when one of a plurality of external devices respectively connected to the plurality of terminal blocks 2 via the wiring is broken due to a short circuit, the spread of fire in the wiring connected to the external device broken due to a short circuit can be prevented.

The current setting unit 3 is disposed in the current supply circuit and includes the variable resistor R31, R32, R33, R34 and the operation unit 3a. The resistance value of the variable resistor R31, R32, R33, R34 is changeable. The operation unit 3a is capable of changing the resistance value of the variable resistor R31, R32, R33, R34. With such a configuration, a maximum current to be supplied to an external device connected with the terminal block 2 can be easily set.

The power device 1 can also be configured as follows.

The current setting unit can use any configuration enabling setting of a maximum current to be supplied to an external devices via the current supply circuit.

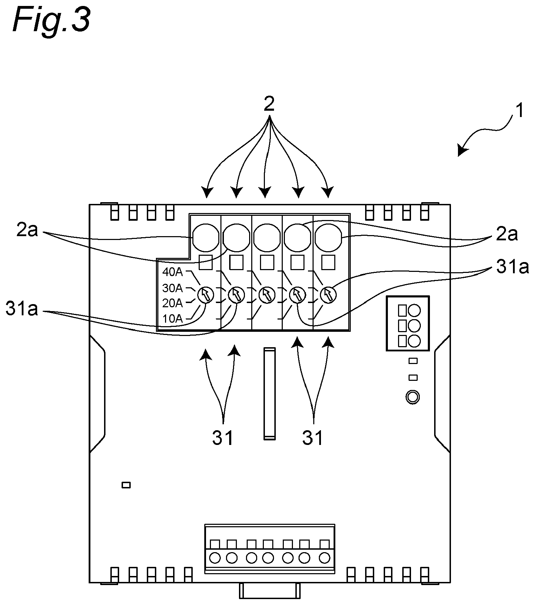

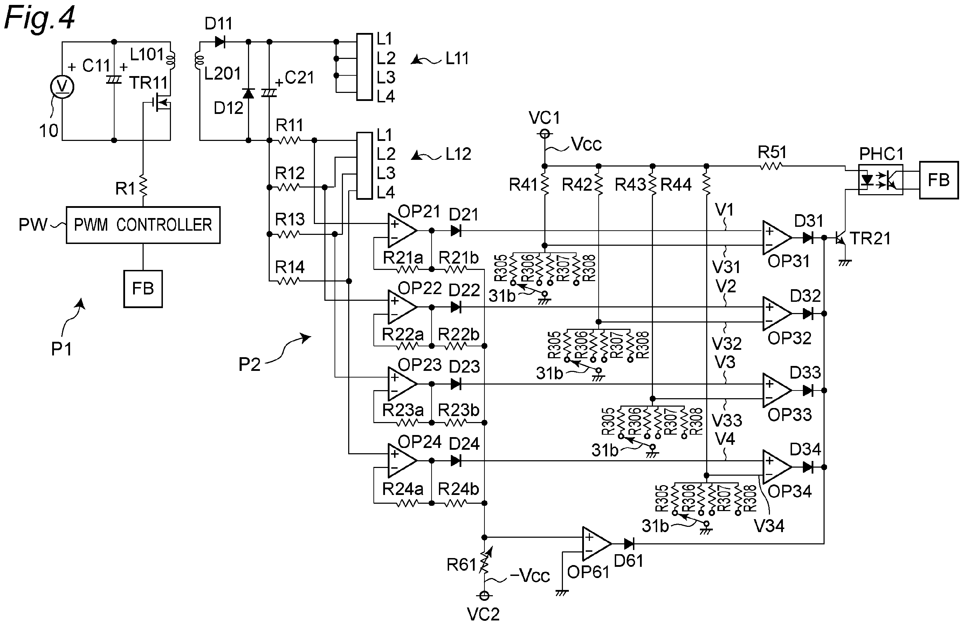

For example, as illustrated in Figs. 3 and 4, the power device 1 may include a current setting unit 31. The current setting unit 31 may be configured to include a plurality of resistors and a selector. The plurality of resistors is disposed in parallel to the current supply circuit and has different resistance values to each other. The selector is configured to select any one of the plurality of resistors configuring a part of the current supply circuit. In Figs. 3 and 4, the power device 1 includes, for example, four set of resistors R301, R302, R303, R304 and four selectors 31b corresponding to the set of resistors R301, R302, R303, R304, respectively. Each set of resistors R301, R302, R303, R304 is configured so that a maximum current to be supplied to the connected external device is set to any one of 10 A, 20 A, 30 A, and 40 A, for example.

The set of resistors R301 is connected to the inverting input terminal of the operational amplifier OP31 and the resistor R41. The set of resistors R302 is connected to the inverting input terminal of the operational amplifier OP32 and the resistor R42. The set of resistors R303 is connected to the inverting input terminal of the operational amplifier OP33 and the resistor R43. The set of resistors R304 is connected to the inverting input terminal of the operational amplifier OP34 and the resistor R44. In the power device 1 illustrated in Figs. 3 and 4, voltages between the resistors R301, R302, R303, R304 and the corresponding resistors R41, R42, R43, R44 before the voltages input into the inverting input terminals of the operational amplifiers OP31, OP32, OP33, OP34 are respectively denoted by V301, V302, V303, V304.

Each resistor R41, R42, R43, R44 is connected to the positive electrode VC1 for supplying the constant voltage Vcc. The constant voltage Vcc is divided by the set of resistors R301, R302, R303, R304 and the resistors R41, R42, R43, R44, thereby obtaining the voltages V301, V302, V303, V304. Voltages to be output respectively from the operational amplifiers OP31, OP32, OP33, OP34 are changed in accordance with resistance values of the sets of resistors R301, R302, R303, R304 selected by the selectors 31b.

The operation unit 31a is configured by, for example, a rotary switch. Rotation of the rotary switch causes a plurality of circuits in which one of the resistors R305, R306, R307, R308 is disposed respectively to be switched via the selector 31b.

In the power device 1 illustrated in Figs. 3 and 4, the current setting unit 31 includes the plurality of resistors and the selector 31a. The plurality of resistors is disposed in parallel to the current supply circuit and has different resistance values to each other. The selector 31b selects any one of the plurality of resistors configuring a part of the current supply circuit. With such a configuration, a maximum current to be supplied to an external device connected with the terminal block 2 can be easily set.

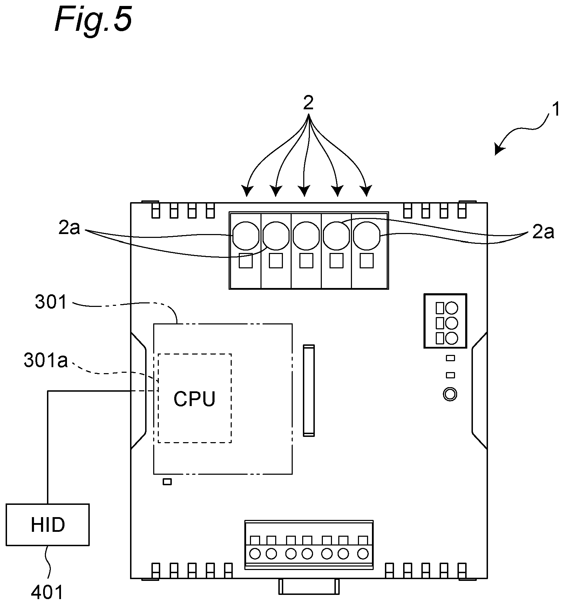

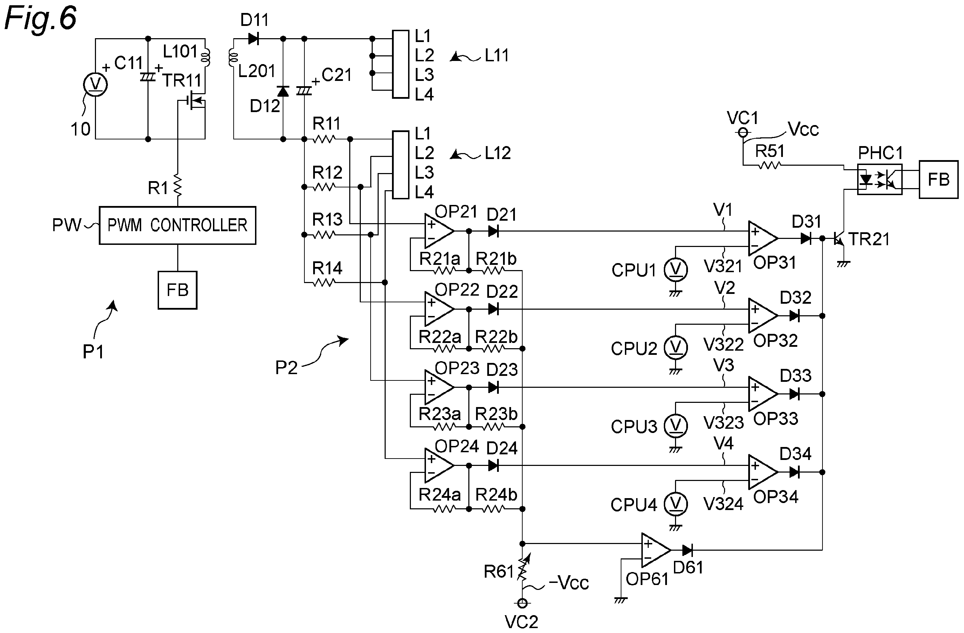

For example, as illustrated in Figs. 5 and 6, the power device 1 may include a current setting unit 301. The current setting unit 301 may include a voltage setting unit that sets a voltage of current flowing through the current supply circuit, and a control device that controls the voltage setting unit and sets a maximum current to be supplied to an external device. In Figs. 5 and 6, the current setting unit 301 includes, for example, four voltage setting units CPU 1, CPU 2, CPU 3, CPU 4, and a the control device 301a. An external input device (HID) 401 is connected to the current setting unit 301. The external input device 401 is, for example, a rotary encoder. The current setting unit 301 and the external input device 401 communicate with each other in a wired or wireless manner.

The voltage setting unit CPU 1 is connected to the inverting input terminal of the operational amplifier OP31. The voltage setting unit CPU 2 is connected to the inverting input terminal of the operational amplifier OP32. The voltage setting unit CPU 3 is connected to the inverting input terminal of the operational amplifier OP33. The voltage setting unit CPU 4 is connected to the inverting input terminal of the operational amplifier OP34. In the power device 1 illustrated in Figs. 5 and 6, voltages to be input into the inverting input terminals of the operational amplifiers OP31, OP32, OP33, OP34 from the voltage setting units CPU1, CPU2, CPU3, CPU4 are respectively denoted by V321, V322, V323, V324. Voltages to be output respectively from the operational amplifiers OP31, OP32, OP33, OP34 are changed in accordance with the voltages set respectively by the voltage setting units CPU1, CPU2, CPU3, CPU4.

The control device 301a includes, for example, a central processing unit (CPU). The control device 301a is configured to store information input from the external input device 401. The control device 301a causes the voltage setting units CPU1, CPU2, CPU3, CPU4 to set voltages based on information input by a user through the external input device 401.

In the power device 1 illustrated in Figs. 5 and 6, the current setting unit 301 includes the voltage setting unit CPU1, CPU2, CPU3, CPU4 and the control device 301a. The voltage setting unit CPU1, CPU2, CPU3, CPU4 sets a voltage of current flowing through the current supply circuit. The control device 301a causes the voltage setting unit CPU1, CPU 2, CPU3, CPU4 to control a maximum current to be supplied to the external device. With such a configuration, a maximum current to be supplied to an external device connected with the terminal block 2 can be set in advance without actually outputting an output current.

A voltage of the secondary circuit P2 of the power device 1 may be controlled not only by the PWM control but also by other methods such as frequency control.

Various embodiments of the present disclosure have been described above in detail with reference to the drawings. Finally, various aspects of the present disclosure will be described. In the following description, as an example, reference signs are also added.

The power device 1 according to a first aspect of the present disclosure includes
a plurality of terminal blocks 2 that is electrically connected to each other, each of the plurality of terminal blocks 2 being configured to be connectable to an external device and to be capable of supplying current to the connected external device, wherein
each of the plurality of terminal blocks 2 includes
a current supply circuit that supplies current to the connected external device, and
a current setting unit 3 that sets a maximum current to be supplied to the external device via the current supply circuit.

In the power device 1 according to a second aspect of the present disclosure,
the current setting unit 3 includes
a variable resistor R31, R32, R33, R34 that is disposed in the current supply circuit, a resistance value of the variable resistor being changeable, and
an operation unit 3a that is capable of changing the resistance value of the variable resistor R31, R32, R33, R34.

In the power device 1 according to a third aspect of the present disclosure,
the current setting unit 31 includes
a plurality of resistors that is disposed in parallel to the current supply circuit and has different resistance values to each other, and
a selector 31b that selects any one of the plurality of resistors.

In the power device 1 according to a fourth aspect of the present disclosure,
the selector 31b includes a switch that switches a plurality of circuits in which one of the plurality of resistors is respectively disposed.

In the power device 1 according to a fifth aspect of the present disclosure,
the current setting unit 301 includes
a voltage of current setting unit CPU1, CPU2, CPU3, CPU4 that sets a voltage flowing through the current supply circuit, and
a control device 301a that controls the voltage setting unit CPU1, CPU 2, CPU3, CPU4 to set a maximum current to be supplied to the external device.

An appropriate combination of any embodiments or modifications among the various embodiments or modifications described above can achieve the effects of the respective embodiments or modifications. In addition, any embodiments can be combined, any examples can be combined, or any embodiment is combined with any example. Further, features in different embodiments or different examples can be combined.

### INDUSTRIAL APPLICABILITY

The power device of the present disclosure is useful for, for example, a switching power supply that simultaneously supplies current to external devices having different rated currents.

### REFERENCE SIGNS LIST

1 power device
10 power supply
2 terminal block
2a hole
3, 31, 301 current setting unit
3a, 31a operation unit
31b selector
301a control device
401 external input unit
C11, C21 capacitor
CPU1, CPU2, CPU3, CPU4 voltage setting unit
D11, D12, D21, D22, D23, D24, D31, D32, D33, D34, D61 diode
OP21, OP22, OP23, OP24, OP31, OP32, OP33, OP34, OP61 operational amplifier
P1 primary circuit
P2 secondary circuit
PHC1 photocoupler
PW PWM controller
R1, R11, R12, R13, R14, R21a, R22a, R23a, R24a, R21b, R22b, R23b, R24b, R41, R42, R43, R44, R51, R305, R306, R307, R308 resistor
R31, R32, R33, R34, R61 variable resistor
R301, R302, R303, R304 set of resistors
TR11, TR21 transistor

## Claims

1. A power device (1) **characterized by** comprising:
a plurality of terminal blocks (2) that is electrically connected to each other, each of the plurality of terminal blocks being configured to be connectable to an external device and to be capable of supplying current to the connected external device, wherein
each of the plurality of terminal blocks (2) includes
a current supply circuit (P1, P2) that supplies current to the connected external device, and
a current setting unit (3) that sets a maximum current to be supplied to the external device via the current supply circuit.

2. The power device (1) according to claim 1, wherein
the current setting unit (3) includes
a variable resistor (R31,R32,R33,R34) that is disposed in the current supply circuit (P1, P2), a resistance value of the variable resistor (R31,R32,R33,R34) being changeable, and
an operation unit (3a) that is capable of changing the resistance value of the variable resistor (R31,R32,R33,R34).

3. The power device according to claim 1, wherein
the current setting unit (31) includes
a plurality of resistors (R305, R306, R307, R308) that is disposed in parallel to the current supply circuit (p1, p2) and has different resistance values to each other, and
a selector (31a) that selects any one of the plurality of resistors (R305, R306, R307, R308).

4. The power device (1) according to claim 3, wherein
the selector (31a) includes a switch that switches a plurality of circuits in which one of the plurality of resistors (R305, R306, R307, R308) is respectively disposed.

5. The power device (1) according to claim 1, wherein
the current setting unit (301) includes
a voltage setting unit (CPU1, CPU2, CPU3, CPU4) that sets a voltage of current flowing through the current supply circuit (P1, P2), and
a control device (301a) that controls the voltage setting unit (CPU1, CPU2, CPU3, CPU4) to set a maximum current to be supplied to the external device.
